# EUROPÄISCHE PATENTSCHRIFT

(11) **EP 0 581 727 B1**
(45) Veröffentlichungstag und Bekanntmachung des Hinweises auf die Patenterteilung: **21.08.1996**
(21) Anmeldenummer: 93810489.0
(22) Anmeldetag: 08.07.1993
(51) Int. Cl.: B25D 17/08

(54) **Werkzeug und Werkzeugaufnahme für Handwerkzeuggeräte**
Tool and chuck for a portable tool
Outil et mandrin pour outil portatif

(30) Priorität: 17.07.1992 DE 4223517
(43) Veröffentlichungstag der Anmeldung: 02.02.1994
(73) Patentinhaber: HILTI Aktiengesellschaft, FL-9494 Schaan (LI)
(72) Erfinder: Schulz, Reinhard, Dr., D-8000 München 70 (DE); Kleine, Werner, Dipl.-Ing., D-2807 Achim-Uesen (DE)
(74) Vertreter: Wildi, Roland

(56) Entgegenhaltungen:
- EP-A- 0 005 384
- DE-A- 3 843 465
- US-A- 2 743 592
- US-A- 4 919 221

## Beschreibung

Die Erfindung betrifft ein Werkzeug zum Einsetzen in eine Werkzeugaufnahme für dem Meisseln und/oder Schlagbohren dienende Handwerkzeuggeräte mit einem Einspannschaft, dessen dem Arbeitsbereich des Werkzeuges abgewandter Endbereich in axialer Richtung und in Umfangsrichtung wirkende Anschlagflächen aufweist und diesen Anschlagflächen in Richtung Arbeitsbereich vorgelagert im wesentlichen radial verlaufende, den Durchmesser des Einspannschaftes überragende, zum freien Ende des Einspannschaftes hin offene Mitnahmeflächen vorgesehen sind.

Bekannte Werkzeuge der vorstehend genannten Art weisen üblicherweise zur Übertragung des Drehmomentes in Umfangsrichtung wirkende Anschlagflächen und zur axialen Halterung der Werkzeuge in einer Werkzeugaufnahme der Handwerkzeuggeräte in axialer Richtung wirkende Anschlagflächen auf. Verbreitet ist es, die in Umfangsrichtung wirkenden Anschlagflächen an Mitnahmenuten anzuordnen, welche zum freien Ende des Einspannschaftes hin offen sind.

Die für die genannten Werkzeuge vorgesehene Werkzeugaufnahme weist einen Aufnahmebereich auf, welcher üblicherweise mit Mitnahmeleisten versehen ist, so dass sich entsprechende Gegenflächen für die Anschlagflächen am Werkzeug bilden. Für die axiale Halterung ist es verbreitet, am Einspannschaft der Werkzeuge axial geschlossene Nuten vorzusehen, mit welchen Gegenflächen der Werkzeugaufnahme zusammenwirken, die meist an radial verschiebbaren Verriegelungselementen der Werkzeugaufnahme angeordnet sind. Zum Entnehmen der Werkzeuge aus der Werkzeugaufnahme ist es damit erforderlich, die Verriegelungselemente aus den axial geschlossenen Nuten der Werkzeuge radial auszurücken. Werkzeuge sowie eine Werkzeugaufnahme dieser Art sind beispielsweise aus der DE-PS 25 51 125 bekannt.

Während an die in axialer Richtung wirkenden Anschlagflächen der Werkzeuge keine grossen Anforderungen gestellt werden, da sie nur für die Halterung der Werkzeuge in der Werkzeugaufnahme massgebend sind, werden dagegen an die in Umfangsrichtung wirkenden Anschlagflächen aufgrund der übertragenden, zum Teil sehr grossen Drehmomente ganz erhebliche Anforderungen gestellt. Aufgrund dieser zu übertragenden grossen Drehmomente ist eine entsprechend grosszügige Dimensionierung der in Umfangsrichtung wirkenden Anschlagflächen erforderlich. Im Hinblick darauf, dass der Einspannschaft in seiner Grössendimensionierung begrenzt ist, hat auch die Grösse der Dimensionierung der in Umfangsrichtung wirkenden Anschlagflächen ihre Grenzen, insbesondere unter Berücksichtigung der einzuhaltenden Massgaben bezüglich Querschnittsschwächung des Einspannschaftes. All diese Grenzwerte bei der Dimensionierung der in Umfangsrichtung wirkenden Anschlagflächen führen dazu, dass aufgrund der zu übertragenden Drehmomente, insbesondere bei Werkzeugen mit grösseren Durchmessern des Arbeitsbereiches ein zu grosser, zu einem vorzeitigen Ausfall der Werkzeuge führender Verschleiss an den in Umfangsrichtung wirkenden Anschlagflächen auftritt.

Aus der DE-OS 38 43 465 ist ein Werkzeug bekannt, bei welchem in Richtung Arbeitsbereich den Anschlagflächen vorgelagert radial den Durchmesser des Einspannschaftes überragende Vorsprünge vorgesehen sind. Diese Vorsprünge bilden radial verlaufende Mitnahmeflächen. Die ebenfalls aus dieser Veröffentlichung bekannte Werkzeugaufnahme weist Ausnehmungen für die Vorsprünge auf, so dass sich für die Mitnahmeflächen entsprechende Gegenflächen bilden.

Die aus der genannten Veröffentlichung bekannten Vorsprünge sind derart ausgebildet, dass die Mitnahmeflächen radial direkt vom Durchmesser des Einspannschaftes abragen und im Verhältnis zur Längserstreckung ein ausserordentlich kleines Radialmass aufweisen. Diese Dimensionierung der Mitnahmeflächen ermöglicht es dadurch nicht, grössere Drehmomente aufzunehmen und die Anschlagflächen damit wirksam zu entlasten.

Der Erfindung liegt die Aufgabe zugrunde, ein Werkzeug zu schaffen, welches im Zusammenwirken mit einer geeigneten Werkzeugaufnahme zur Übertragung grosser Drehmomente imstande ist, ohne dass die in Umfangsrichtung wirkenden Anschlagflächen des Einspannschaftes einem zu grossen, zu einem vorzeitigen Ausfall führenden Verschleiss unterliegen.

Erfindungsgemäss wird die Aufgabe dadurch gelöst, dass das Radialmass der im wesentlichen radial verlaufenden Mitnahmeflächen grösser als deren Axialmass ist.

Die erfindungsgemässen Abmessungsverhältnisse der Mitnahmeflächen ermöglichen eine aus der Sicht der Drehmomentübertragung wesentlich verbesserte Dimensionierung. Insbesondere besteht die Möglichkeit, die Mitnahmeflächen insgesamt grösser auszubilden. Der für die Übertragung des Drehmomentes wirksame Durchmesser nimmt damit eine ausreichende Grösse an, so dass die Mitnahmeflächen einen so grossen Drehmomentanteil aufnehmen können, dass die Anschlagflächen wirksam entlastet werden.

Vorteilhafte Abmessungsverhältnisse werden erzielt, wenn zweckmässigerweise das Radialmass der Mitnahmeflächen etwa das 1,2- bis 2-fache des Axialmasses beträgt.

Vorzugsweise sind die Mitnahmeflächen Teil einer zum freien Ende des Einspannschaftes hin offenen Profilierung, wobei in zweckmässiger Weiterbildung diese Profilierung keilwellenartig ausgebildet ist. Dabei versteht sich die keilwellenartige Profilierung auch aus der Sicht der ringförmigen Stirnfläche, so dass sich quasi axial verlaufende Klauen bilden. Diese Klauen können in Verbindung mit einer axialen Verschiebbarkeit des Werkzeuges gegenüber der Werkzeugaufnahme auch nach Art einer Kupplung eingesetzt werden. Es besteht somit die Möglichkeit, das Zusammenwirken der Mitnahmeflächen mit den Gegenflächen der Werkzeugaufnahme auch zeitlich zu begrenzen, das heisst nur während jener Dauer, wenn beispielsweise in Abstimmung auf äussere Einflüsse ein Axialweg überwunden wird. Dieser Effekt kann beispielsweise beim Anbohren ausgenutzt werden, wenn in einer ersten Phase nur geringe Drehmomente übertragen werden müssen und die grösseren Drehmomente erst in einer zweite Phase zum Tragen kommen, wenn beispielsweise das Werkzeug mit seinem gesamten Arbeitsbereich zum Einsatz gelangt. Insbesondere bei Bohrkronen bietet sich ein diesbezügliches Anwendungsfeld an, wo in einer ersten Phase nur ein zentrierender Teil des Werkzeuges zum Einsatz gelangt und erst in einer zweiten, späteren Phase die Krone vollumfänglich an dem zu bearbeitenden Material angreift, was zu einer wesentlichen Erhöhung der zu übertragenden Drehmomente führt.

An sich besteht die Möglichkeit, ein Werkzeug mit den erfindungsgemäss angeordneten Mitnahmefläche in eine herkömmliche Werkzeugaufnahme einzusetzen. Bei einem diesbezüglichen Einsatz ist allerdings nur die Grundfunktion, nämlich der Antrieb des Werkzeuges gewährleistet. Von den Vorteilen entsprechend vorliegender Erfindung wird aber nicht Gebrauch gemacht, so dass es sich bei einer diesbezüglichen Anwendung nur um eine gegebenenfalls zeitlich begrenzte Übergangslösung handeln kann.

Die erfindungsgemässen Vorteile werden dann vollumfänglich ausgeschöpft, wenn gemäss einer weiteren Ausführungsform der Erfindung die Werkzeugaufnahme einen in Richtung Mündung der Aufnahmeöffnung äusseren Aufnahmebereich und einen entgegen der Mündung der Aufnahmeöffnung an den äusseren Aufnahmebereich anschliessenden inneren Aufnahmebereich aufweist, wobei der innere Aufnahmebereich in axialer Richtung und in Umfangsrichtung mit den Anschlagflächen des Werkzeuges zusammenwirkende Gegenflächen aufweist und der äussere Aufnahmebereich mit den Mitnahmeflächen des Werkzeuges zusammenwirkende Gegenflächen aufweist, deren Radialmass grösser als ihr Axialmass ist.

Die dadurch stufig ausgebildete Aufnahmeöffnung mit Aufnahmebereichen unterschiedlich grosser Querschnitte ermöglicht die Aufnahme sowohl herkömmlicher als auch die Aufnahme von Werkzeugen mit Mitnahmeflächen entsprechend vorliegender Erfindung. Dabei gilt wiederum der Grundsatz, dass die Vorteile entsprechend vorliegender Erfindung nur dann ausgenutzt werden, wenn ein Werkzeug verwendet wird, das auf die Werkzeugaufnahme abgestimmt ist, das heisst wenn Mitnahmeflächen am Werkzeug vorgesehen sind, welche mit entsprechenden Gegenflächen der Werkzeugaufnahme zusammenwirken. Dadurch, dass das Radialmass der Gegenflächen grösser als deren Axialmass ist, besteht die Möglichkeit, ausreichend grosse Drehmomente zu übertragen, so dass insbesondere bei Verwendung von Werkzeugen mit grösserem Durchmesser des Arbeitsbereiches eine ausreichende Entlastung der Gegenflächen des inneren Aufnahmebereiches der Werkzeugaufnahme zustande kommt. Einerseits die Möglichkeit einer grösseren Dimensionierung der Gegenflächen sowie andererseits eine Vergrösserung des für die Drehmomentübertragung wirksamen Durchmessers der Gegenflächen sind hier massgebend.

Vorzugsweise sind die Gegenflächen des äusseren Führungsbereiches Teil einer zur Mündung der Aufnahmeöffnung hin offenen Profilierung, wobei diese Profilierung zudem zweckmässigerweise keilwellenartig ausgebildet ist. Die keilwellenartige Ausbildung wird dabei so verstanden, dass sie sich auch über die freie Stirnseite des äusseren Führungsbereiches der Werkzeugaufnahme erstreckt. Es bildet sich damit aus der Sicht der Stirnseite des äusseren Führungsbereiches eine Art Kupplung mit axial verlaufenden Klauen. Eine derartige Ausbildung bietet - wie schon vorstehend erläutert - die Möglichkeit, eine Ausführungsform zu schaffen, entsprechend welcher ein Zusammenwirken der Gegenflächen des äusseren Führungsbereiches mit den Mitnahmeflächen des Werkzeuges erst nach Überwindung eines bestimmten Axialweges des Werkzeuges gegenüber der Werkzeugaufnahme erfolgt. Die Überwindung dieses Axialweges kann entweder grundsätzlich oder nur zeitlich begrenzt erfolgen, beispielsweise über jeden Zeitraum, wo ein grösseres Drehmoment zu übertragen ist. Insbesondere bietet sich eine solche Lösung bei zweistufig arbeitenden Werkzeugen an, das heisst beispielsweise bei Bohrkronen, wo in einer ersten Phase ein Zentrierbohrer mit kleinem Drehmoment und in einer zweiten Phase die ein erheblich grösseres Drehmoment benötigende Bohrkrone zum Einsatz gelangt.

Das im Verhältnis zum Axialmass grössere Radialmass sowohl der Mitnahmeflächen am Werkzeug als auch der Gegenflächen der Werkzeugaufnahme führt zusätzlich zu herstellungstechnischen und handhabungsbedingten Vorteilen. In herstellungstechnischer Sicht liegt der Vorteil insbesondere darin, dass die Umformwerkzeuge beispielsweise für ein Fliesspressen optimaler gestaltet werden können und dadurch einem weniger grossen Verschleiss unterliegen. Handhabungstechnisch werden Vorteile dahingehend erzielt, dass die richtigen Eingriffstellungen zwischen Werkzeug und Werkzeugaufnahme leichter aufgefunden werden können und darüber hinaus der Weg zur Schaffung des endgültigen Eingriffs der Werkzeuge innerhalb der Werkzeugaufnahme verkleinert werden kann.

Die Erfindung wird nachstehend, anhand der sie beispielsweise wiedergebenden Zeichnungen, näher erläutert. Es zeigen:
- Fig. 1: eine Ansicht des Einspannschaftes eines Werkzeuges gemäss Erfindung, teilweise geschnitten;
- Fig. 2: einen Schnitt durch eine schematisch dargestellte Werkzeugaufnahme für einen Einspannschaft gemäss Fig. 1.

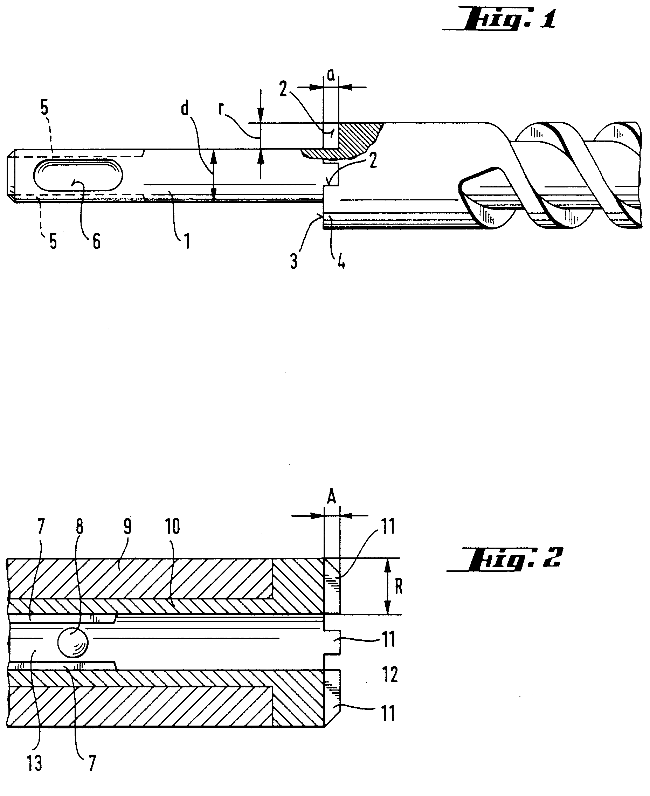

Die Figur 1 zeigt ein Werkzeug zum Einsetzen in eine Werkzeugaufnahme eines Handwerkzeuggerätes. Das Werkzeug weist einen Einspannschaft 1 auf, dessen dem Arbeitsbereich des Werkzeuges abgewandter Endbereich in axialer Richtung und in Umfangsrichtung wirkende Anschlagflächen aufweist. Diesen Anschlagflächen sind im wesentlichen radial verlaufende, den Durchmesser d des Einspannschaftes 1 überragende, zum freien Ende des Einspannschaftes 1 hin offene Mitnahmeflächen 2 in Richtung Arbeitsbereich vorgelagert.

Das Radialmass r der im wesentlichen radial verlaufenden Mitnahmeflächen 2 ist grösser als deren Axialmass a. Die Mitnahmeflächen 2 sind Teil einer zum freien Ende des Einspannschaftes 1 hin offenen Profilierung, die aus der Sicht der ringförmigen Stirnfläche 3 axial verlaufende Klauen 4 bildet. Diese Klauen 4 können beim axialen Verschieben des Werkzeuges gegenüber einer Werkzeugaufnahme auch nach Art einer Kupplung eingesetzt werden.

Die in axialer Richtung und in Umfangsrichtung wirkenden Anschlagflächen werden von zwei axial zum freien Ende des Einspannschaftes 1 hin offenen Drehmitnahmenuten 5 und zwei axial geschlossenen Verriegelungsnuten 6 gebildet. Die Drehmitnahmenuten 5 weisen im wesentlichen radial verlaufende Flanken auf.

In Fig. 2 ist schematisch eine Werkzeugaufnahme dargestellt, mit einem in Richtung Mündung der Aufnahmeöffnung äusseren Aufnahmebereich 12 und einem entgegen der Mündung der Aufnahmeöffnung an den äusseren Aufnahmebereich 12 anschliessenden inneren Aufnahmebereich 13. Der innere Aufnahmebereich 13 weist Gegenflächen auf, die in Umfangsrichtung mit den Anschlagflächen des Werkzeuges zusammenwirken.

Die in Umfangsrichtung mit den Anschlagflächen des Werkzeuges zusammenwirkenden Gegenflächen werden von Mitnahmeleisten 7 gebildet. Verriegelungselemente 8, die beim Versetzen einer Betätigungshülse 9 entweder in axialer Richtung oder in Umfangsrichtung radial versetzbar sind, bilden die Gegenflächen, die mit den Verriegelungsnuten 6 des Einspannschaftes 1 zusammenwirken.

Die Werkzeugaufnahme zeigt eine Führung 10 mit nicht dargestellten, radialen Durchtrittsöffnungen, in denen die Verriegelungselemente 8 geführt sind. Durch Versetzen der Betätigungshülse 9 entweder axial oder in Umfangsrichtung sind im gezeigten Beispiel nicht dargestellte Ausnehmungen in der Betätigungshülse 9 mit Verriegelungselementen 8 in Deckung bringbar, so dass die in der Figur 2 als Kugeln dargestellten Verriegelungselemente 8 aus den Verriegelungsnuten 6 ausrücken können und dadurch den Einspannschaft 1 freigeben, so dass das Werkzeug aus der Führung 10 und damit aus der Werkzeugaufnahme entnommen werden kann.

Der äussere Aufnahmebereich 12 weist Gegenflächen auf, deren Radialmass R grösser als ihr Axialmass A ist und mit den Mitnahmeflächen 2 des Werkzeuges zusammenwirken. Die Gegenflächen des äusseren Aufnahmebereiches 12 sind Teil einer zur Mündung der Aufnahmeöffnung hin offenen, keilwellenartig ausgebildeten Profilierung, die sich über die freie Stirnseite des äusseren Aufnahmebereiches 12 der Werkzeugaufnahme erstreckt. Aus der Sicht der Stirnseite des äusseren Aufnahmebereiches 12 bildet die Profilierung eine Art Kupplung mit axial verlaufenden Klauen 11.

Um einen dauernden Eingriff der Klauen 4, 11 zu gewährleisten, können als Verriegelungselemente auch walzenförmige Elemente verwendet werden. Diese bewirken bei der Betätigung des Handwerkzeuggerätes einen geringeren axialen Versatz des Werkzeuges.

## Patentansprüche

1. Werkzeug zum Einsetzen in eine Werkzeugaufnahme für dem Meisseln und/oder Schlagbohren dienende Handwerkzeuggeräte mit einem Einspannschaft (1), dessen dem Arbeitsbereich des Werkzeuges abgewandter Endbereich in axialer Richtung und in Umfangsrichtung wirkende Anschlagflächen aufweist und diesen Anschlagflächen in Richtung Arbeitsbereich vorgelagert im wesentlichen radial verlaufende, den Durchmesser des Einspannschaftes (1) überragende, zum freien Ende des Einspannschaftes (1) hin offene Mitnahmeflächen (2) vorgesehen sind, **dadurch gekennzeichnet**, dass das Radialmass (r) der Mitnahmeflächen (2) grösser als das Axialmass (a) ist.

2. Werkzeug nach Anspruch 1, dadurch gekennzeichnet, dass das Radialmass (r) das 1,2- bis 2-fache des Axialmasses (a) beträgt.

3. Werkzeug nach Anspruch 1 oder 2, dadurch gekennzeichnet, dass die Mitnahmeflächen (2) Teil einer zum freien Ende des Einspannschaftes (1) hin offenen Profilierung sind.

4. Werkzeug nach Anspruch 3, dadurch gekennzeichnet, dass die Profilierung keilwellenartig ausgebildet ist.

5. Werkzeugaufnahme mit Aufnahmeöffnung für ein Werkzeug insbesondere nach einem der Ansprüche 1 bis 4, mit einem in Richtung Mündung der Aufnahmeöffnung äusseren Aufnahmebereich (12) und einem entgegen der Mündung der Aufnahmeöffnung an den äusseren Aufnahmebereich (12) anschliessenden inneren Aufnahmebereich (13), wobei der innere Aufnahmebereich (13) in axialer Richtung und in Umfangsrichtung Gegenflächen aufweist welche dazu bestimmt sind mit den Anschlagflächen des Werkzeugs zusammenzuwirken, und der äussere Aufnahmebereich (12) Gegenflächen aufweist, welche dazu bestimmt sind mit den Mitnahmelflächen (2) eines Werkzeugs zusammenzuwirken, wobei das Radialmass (R) der Gegenflächen des äußeren Aufnahmebereichs grösser als das Axialmass (A) ist.

6. Werkzeugaufnahmen nach Anspruch 5, dadurch gekennzeichnet, dass die Gegenflächen des äusseren Aufnahmebereiches (12) Teil einer zur Mündung der Aufnahmeöffnung hin offenen Profilierung sind.

7. Werkzeugaufnahme nach Anspruch 6, dadurch gekennzeichnet, dass die Profilierung keilwellenartig ausgebildet ist.

## Claims

1. Tools for insertion into a tool chuck of chiselling and/or percussion drilling hand tools, comprising a clamping shaft (1) the end of which facing away from the work area of the tool has peripherally and axially effective stop surfaces, and with pickup surfaces (2) which are in front of these stop surfaces, as seen in the direction of the work area, and essentially radially extending and protruding over the diameter of the clamping shaft (1) and open towards the free end of the clamping shaft (1), **characterized in that** the radial dimension (r) of the pickup surfaces (2) is greater than the axial dimension (a).

2. Tool according to Claim 1, **characterized in that** the radial dimension (r) is between 1.2 and 2 times the axial dimension.

3. Tool according to Claim 1 or 2, **characterized in that** the pickup surfaces (2) are part of a profile which is open towards the free end of the clamping shaft (1).

4. Tool according to Claim 3, **characterized in that** the profile is a splined shaft.

5. Tool chuck with receiving aperture for a tool in particular according to one of Claims 1 to 4, **characterized by** an outer receiving area (12), as seen in the direction of the receiving aperture mouth, and an inner receiving area (13) which is adjacent the outer receiving area (12) in opposition to the mouth of the receiving aperture, and the inner receiving area (13) comprises in the axial and peripheral direction counter surfaces to co-operate with the stop surfaces of the tool, and the outer receiving area (12) comprises counter surfaces to cooperate with the pickup surfaces (2) of a tool, and the radial dimension (R) of the counter surfaces of the outer receiving area is greater than the axial dimension (A).

6. Tool chucks according to Claim 5, **characterized in that** the counter surfaces of the outer receiving area (12) are part of a profile which is open towards the mouth of the receiving aperture.

7. Tool chuck according to Claim 6, **characterized in that** the profile is a splined shaft.

## Revendications

1. Outil pour l'insertion dans un mandrin pour des appareils portatifs servant au burinage et/ou au perçage à percussion, comprenant une tige de serrage (1) dont la section terminale à l'opposé de la zone de travail de l'outil comporte des surfaces d'arrêt agissant dans la direction axiale et dans la direction circonférentielle, et des surfaces d'entraînement (2) d'extension sensiblement radiale, dépassant du diamètre de ladite tige de serrage (1) et ouvertes en direction de l'extrémité libre de la tige de serrage (1) étant prévues en avant desdites surfaces d'arrêt en direction de la zone de travail, caractérisé en ce que la cote radiale (r) des surfaces d'entraînement (2) est plus grande que la cote axiale (a).

2. Outil selon la revendication 1, caractérisé en ce que la cote radiale (r) est égale à 1,2 à 2 fois la cote axiale (a).

3. Outil selon la revendication 1 ou 2, caractérisé en ce que les surfaces d'entraînement (2) font partie d'un profilage ouvert en direction de l'extrémité libre de la tige de serrage (1).

4. Outil selon la revendication 3, caractérisé en ce que le profilage présente la forme d'un arbre cannelé.

5. Mandrin, comprenant une ouverture de réception pour un outil, notamment selon l'une des revendications 1 à 4, caractérisé par une zone de réception (12) extérieure en direction de la sortie de l'ouverture de réception et par une zone de réception intérieure (13) qui se raccorde à la zone de réception extérieure (12) dans le sens opposé à la sortie de l'ouverture de réception, la zone de réception intérieure (13) présentant dans le sens axial et dans le sens circonférentiel des contre-surfaces destinées à coopérer avec les surfaces d'arrêt de l'outil, alors que la zone de réception extérieure (12) est pourvue de contre-surfaces destinées à coopérer avec les surfaces d'entraînement (2) d'un outil, la cote radiale (r) des contre-surfaces de la zone de réception extérieure étant plus grande que la cote axiale (A).

6. Mandrin selon la revendication 5, caractérisé en ce que les contre-surfaces de la zone de réception extérieure (12) font partie d'un profilage ouvert en direction de la sortie de l'ouverture de réception.

7. Mandrin selon la revendication 6, caractérisé en ce que le profilage présente la forme d'un arbre cannelé.
